Europäisches Patentamt

European Patent Office

Office européen des brevets

(11) Veröffentlichungsnummer: **0 163 019**
**B1**

(12) **EUROPÄISCHE PATENTSCHRIFT**

(45) Veröffentlichungstag der Patentschrift:
**24.02.88**

(21) Anmeldenummer: **85102594.0**

(22) Anmeldetag: **07.03.85**

(51) Int. Cl.⁴: **E 21 D 20/02**

(54) **Zerstörbare Patrone für Mehrkomponenten-Massen.**

(30) Priorität: **30.04.84  DE 3416094**

(43) Veröffentlichungstag der Anmeldung:
**04.12.85 Patentblatt 85/49**

(45) Bekanntmachung des Hinweises auf die Patenterteilung:
**24.02.88 Patentblatt 88/8**

(84) Benannte Vertragsstaaten:
**AT BE CH DE FR GB IT LI NL SE**

(56) Entgegenhaltungen:
**DE-A-1 494 920**
**DE-A-2 065 473**
**DE-A-2 207 076**
**DE-U-1 876 513**
**US-A-4 353 463**

(73) Patentinhaber: **HILTI Aktiengesellschaft, FL- 9494 Schaan (LI)**

(72) Erfinder: **Lang, Gusztav, Dr. Dipl.- Ing., Dr. Böttcher- Strasse 26, D-8000 München 60 (DE)**
Erfinder: **Mauthe, Peter, Dipl.- Chem., Voestweg 10, D-8065 Kleinberghofen (DE)**

(74) Vertreter: **Wildi, Roland, Hilti Aktiengesellschaft Patentabteilung, FL- 9494 Schaan (LI)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

0 163 019

## Beschreibung

Die Erfindung betrifft einen zerstörbaren Behälter für eine aushärtende Mehrkomponenten-Masse zur Verankerung eines Befestigungselementes in einem Bohrloch, bestehend aus einer Aussenpatrone und einer darin angeordneten Innenpatrone, wobei in der einen Patrone die Harzkomponente und Füllstoffe und in der anderen Patrone die Härterkomponente sowie gegebenenfalls weitere Füllstoffe enthalten sind.

Chemische Verankerungen von Befestigungselementen mittels aushärtender Massen weisen gegenüber mechanisch, d. h. beispielsweise durch einen Spreizvorgang mit dem Aufnahmematerial zustande kommenden Verankerungen wesentliche Vorteile auf. Diese bestehen insbesondere darin, dass im Aufnahmematerial kein Spreizdruck erzeugt wird und somit auch Befestigungen mit geringen Randabständen möglich sind.

Bei den bisher bekannten Ankern werden für die in einem Behälter angeordnete aushärtende Masse meist relativ hochviskose Materialien, wie beispielsweise Polyesterharz, Epoxidharz oder Polyurethanharz verwendet. Insbesondere bei ungenügender Reinigung des Bohrloches vor dem Einbringen der Masse, aber auch bei porösem oder feine, von Auge kaum feststellbare Mikrorisse aufweisendem Aufnahmematerial ist die Haftfähigkeit hochviskoser Harze mit dem Aufnahmematerial beschränkt. Neben sofort feststellbarer Reduktion der Verankerungswerte können insbesondere bei Wechselbelastung der Befestigungen aber auch ungünstige Langzeitverhalten auftreten.

Es wurde versucht, diesen Nachteilen mit einer Verwendung niedrigviskoser, dh dünnflüssiger Harze zu begegnen, was aber insbesondere bei nach oben oder horizontal gerichteten Bohrlöchern zu einem Auslaufen des Harzes vor dem Aushärten führt. Zur Vermeidung dieses Auslaufens ist es bekannt vgl. z. B. DE-A-2 065 473, einen Mehrkammerbehälter zu verwenden und diesen am Bohrlochmund mit Komponenten einer besonders schnell aushärtenden, schäumbaren Harzmischung zu füllen. Solch schäumbare Massen weisen jedoch eine wesentlich geringere Festigkeit auf, so dass es sich nicht umgehen lässt, die Befestigungselemente länger und die Bohrlöcher entsprechend tiefer herzustellen, was mit einem erhöhten Zeit- und Kostenaufwand verbunden ist. Für den Schäumvorgang ist ausserdem Wasser erforderlich, welches bei den unterschiedlichen Aufnahmematerialien nicht immer vorhanden ist.

Weitere Möglichkeiten zur Abdichtung des Bohrloches, wie Propfen oder dgl., haben sich in der Praxis als unzweckmässig erwiesen, da diese durch das meist unter Drehung erfolgende Eintreiben der Ankerstange beschädigt oder zerstört werden.

Der Erfindung liegt die Aufgabe zugrunde, eine aushärtende Mehrkomponenten-Masse zur Verankerung von Befestigungselementen in einem Behälter derart anzuordnen, dass einerseits hohe Verankerungswerte erzielt werden und andererseits ein unproblematisches wirtschaftliches Setzen gewährleistet ist.

Erfindungsgemäss wird die Aufgabe dadurch gelöst, das die eine niedrigviskose Harzkomponente enthaltende Patrone einen in Einführrichtung vorderen Bereich und einen daran anschliessenden, rückwärtigen Bereich umfasst, wobei die Harzkomponente im rückwärtigen Bereich Thixotropiermittel zur Erhöhung der Viskosität gegenüber derjenigen der Harzkomponente im vorderen Bereich enthält.

Durch die erfindungsgemässe Lösung besteht die Harzkomponente im Behälter somit aus wenigstens zwei voneinander getrennten Anteilen unterschiedlicher Viskosität. Der nach dem Einführen des Behälters in ein Bohrloch im Bohrlochtiefsten angeordnete Anteil der Harzkomponente ist dabei wesentlich dünnflüssiger als der in Richtung der Bohrlochmündung daran anschliessende Anteil. Der durch an sich bekannte Thixotropiermittel, wie beispielsweise pyrogene Kieselsäuren, Kaolin, Asbest, Montmorillonit oder dergleichen angereicherte Anteil der Harzkomponente, zusammen mit allfälligen Füllstoffen, wie Quarz, Glas, Kreide oder dergleichen, bildet eine zähe Paste, die sich einerseits der Bohrlochwandung und andererseits der zu setzenden Ankerstange anpassen kann, um ein Ausfliessen des dünnflüssigen Anteiles der Harzkomponente aus dem Bohrloch zu verhindern. Als Harzkomponente kann somit ein niederviskoses Harz wie beispielsweise Methylmethacrylat (MMA) verwendet werden. Eine dünnflüssige Harzkomponente vermag den an der Bohrlochwandung anhaftenden Staub ausreichend zu binden und somit eine gute Verbindung mit dem Aufnahmematerial einzugehen. Weist das Aufnahmematerial im Bereich des Bohrloches Haarrisse auf, so werden diese durch die dünnflüssige Harzkomponente ebenfalls ausgefüllt und die Festigkeit des Aufnahmematerials dadurch verbessert.

Für eine einfache Herstellung des Behälters ist es zweckmässig, die Füllstoffe und die Harzkomponente, deren rückwärtiger Anteil Thixotropiermittel enthält, in der Aussenpatrone und die Härterkomponente in der Innenpatrone anzuordnen. Eine solche Anordnung ist auch deshalb günstig, weil die Harzkomponente volumenmässig meist ein Mehrfaches der Härterkomponente beträgt. Sowohl für die Aussenpatrone als auch für die Innenpatrone können beispielsweise leicht zerstörbare Kunststoffe oder Glas verwendet werden. Die zerstörte und zerkleinerte Behälterwandung ergibt zusätzliche Füllstoffe.

Um ein Auslaufen des dünnflüssigen Anteiles der Harzkomponente aus dem Bohrloch sicher zu vermeiden, muss die Schichtdicke des das Thixotropiermittel enthaltenden, dickflüssigen Anteiles genügend gross sein. Sie darf aber auch nicht zu gross sein, da die Verbindung des dickflüssigen Anteiles der Harzkomponente mit der Bohrlochwandung schlechter ist als diejenige des dünnflüssigen Anteiles, was sich durch einen reduzierten Verankerungswert äussern kann. Für günstige Verhältnisse ist es daher vorteilhaft, dass die Länge des das Thixotropiermittel enthaltenden, rückwärtigen Bereiches der Harzkomponente das 0,2- bis 0,4-fache der Länge des vorderen Bereiches der Harzkomponente beträgt. Ein solches Verhältnis schafft optimale Bedingungen für eine gute Verankerung. Für die Anteile unterschiedlicher Viskosität können sowohl gleiche als auch unterschiedliche Harze verwendet werden. So ist es beispielsweise möglich, dass das Harz im

2

Bohrlochtiefesten aus Methylmethacrylat und das Harz an der Bohrlochmündung aus Polyester oder Epoxidharz besteht.

An der Grenzfläche zwischen dem vorderen und dem rückwärtigen Bereich der Harzkomponente besteht an sich die Möglichkeit einer Vermischung. Um dies zu vermeiden, ist es zweckmässig, zwischen dem vorderen Bereich und dem rückwärtigen Bereich der Harzkomponente eine Trennschicht anzuordnen. Eine solche Trennschicht soll beim Setzvorgang leicht zerstörbar sein. Die Trennschicht kann somit beispielsweise aus Folie, Glas oder auch aus einer teilweise ausgehärteten Harzschicht bestehen. Weiterhin ist es möglich, zwischen den beiden Bereichen beispielsweise eine Wachsschicht oder dgl anzuordnen. Falls der Behälter beispielsweise bei zugeschmolzenen Glaspatronen nicht ganz gefüllt wird, kann der verbleibende Hohlraum ebenfalls durch eine Trennschicht von der Harzkomponente abgegrenzt werden oder beispielsweise mit Fasermaterial ausgefüllt werden.

Für die richtige Anwendung des erfindungsgemässen Behälters ist es wichtig, dass dieser in der dafür vorgesehenen Lage in das Bohrloch eingebracht wird. Bei verkehrtem Einführen des Behälters in ein Bohrloch befindet sich der dickflüssige Anteil der Harzkomponente im Bohrlochgrund, während der dünnflüssige Anteil ungehindert aus dem Bohrloch ausfliessen kann. Um das richtige Einführen des Behälters zu erleichtern, können daran beispielsweise optische Markierungen angebracht werden. Fehlmanipulationen können dadurch aber nicht vollständig ausgeschlossen werden. Um das lagerichtige Einführen des Behälters ins Bohrloch sicherzustellen, ist es daher vorteilhaft, das rückwärtige Ende der Aussenpatrone mit einer Kappe zu verbinden. Die äusseren Abmessungen dieser Kappe sind vorzugsweise grösser als der Durchmesser des für die Aufnahme des Behälters vorgesehenen Bohrloches. Die Kappe kann entweder auf den bereits verschlossenen Behälter aufgesteckt oder über eine Rast- bzw Gewindeverbindung mit dem Behälter verbunden werden und dabei gleichzeitig dessen Verschluss bilden. Um den Setzvorgang nicht zu behindern, soll die Kappe ebenfalls aus einem leicht zerstörbaren Material, wie beispielsweise Kunststoff oder dergleichen, bestehen.

Die Erfindung soll nachstehend anhand der sie beispielsweise wiedergebenden Zeichnungen näher erläutert werden. Es zeigen:

Fig. 1 einen erfindungsgemässen Behälter, im Längsschnitt;

Fig. 2 eine Teilansicht eines weiteren erfindungsgemässen Behälters, mit aufgesteckter Kappe;

Fig. 3 eine weitere Ausführung eines erfindungsgemässen Behälters mit einem Rastverschluss;

Fig. 4 einen weiteren erfindungsgemässen Behälter mit Gewindeverschluss.

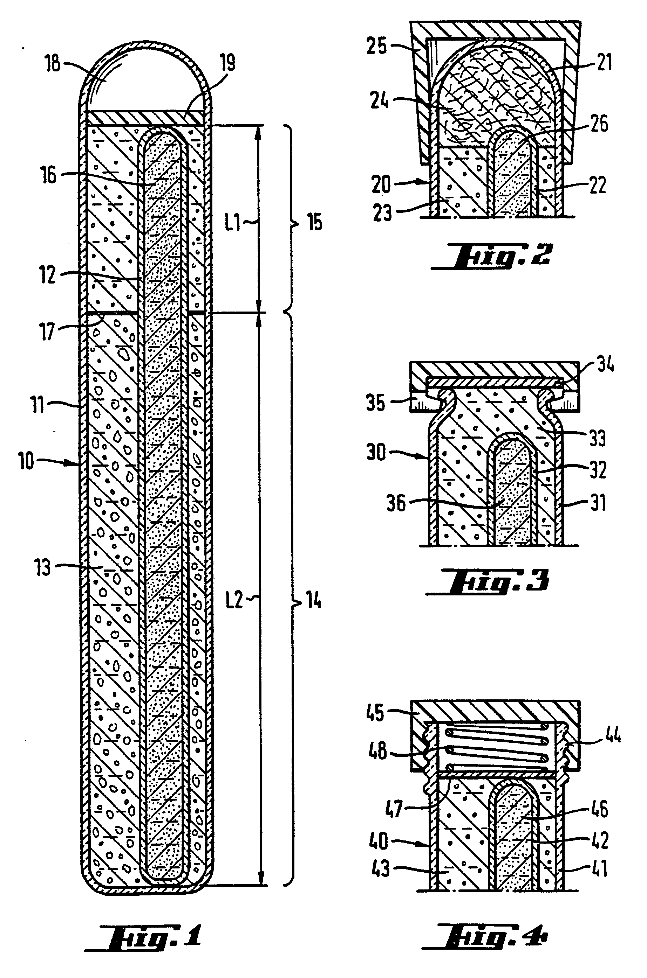

Der aus Fig. 1 ersichtliche, insgesamt mit 10 bezeichnete Behälter besteht aus einer Aussenpatrone 11 und einer darin angeordneten Innenpatrone 12. In der Aussenpatrone 11 ist die Harzkomponente 13 angeordnet, die aus einem in Setzrichtung vorderen Bereich 14 und einem daran anschliessenden, rückwärtigen Bereich 15 besteht. Der im rückwärtigen Bereich 15 angeordnete Anteil der Harzkomponente 13 ist mit einem Thixotropiermittel angereichert und weist daher eine sehr hohe Viskosität auf. Der im vorderen Bereich 14 der Aussenpatrone 11 angeordnete Anteil der Harzkomponente 13 ist dagegen sehr niederviskos und besteht beispielsweise aus Methylmethacrylat (MMA). Der dünnflüssige Anteile der Harzkomponente 13 im vorderen Bereich 14 enthält relativ viel Füllstoff, beispielsweise in der Form von Hohlglaskugeln, Quarzmehl, Glasröhrchen oder dergleichen. Sowohl die Innenpatrone 12 als auch die Aussenpatrone 11 bestehen aus leicht zerstörbarem Material, wie beispielsweise Glas oder sprödem Kunststoff. In der Innenpatrone 12 ist die Härterkomponente 16 angeordnet. Die Härterkomponente 16 besteht beispielsweise aus Dibenzoylperoxid, Polymethylmethacrylat-Partikeln und Füllstoff, beispielsweise Quarzmehl. Um bei der Lagerung und Handhabung des Behälters 10 ein Vermischen der Anteile der Harzkomponente 13 im vorderen Bereich 14 mit derjenigen im rückwärtigen Bereich 15 zu vermeiden, ist zwischen den beiden Bereichen 14, 15 eine Trennschicht 17 angeordnet. Die Trennschicht 17 kann beispielsweise aus Folie, Glas oder dergleichen bestehen. Beim Verschliessen einer aus Glas bestehenden Aussenpatrone 11 durch Zuschmelzen entsteht in der Aussenpatrone 11 praktisch unvermeidbar ein Lufteinschluss 18. Damit dieser Lufteinschluss 18 keine chemische Veränderung der darin angeordneten Harzkomponente 13 hervorrufen kann, sowie um ein axiales Verschieben der Komponenten in der Aussenpatrone 11 zu vermeiden, ist vor dem Verschliessen der Aussenpatrone 11 ein Abschlussdeckel 19 in diese eingesetzt worden. Der Anteil bzw die Länge L1 des rückwärtigen Bereiches 15 der Harzkomponente 13 beträgt etwa ein Drittel des Anteils bzw der Länge L2 des vorderen Bereiches 14.

Nachstehend wird ein Ausführungsbeispiel eines erfindungsgemässen Behälters für Ankerstangen M12 beschrieben:

| | | | |
|---|---|---|---|
| Länge der Aussenpatrone: | 110 | mm | |
| Durchmesser der Aussenpatrone: | 11,7 | mm | |
| Länge der Innenpatrone: | 90 | mm | |
| Durchmesser der Innenpatrone: | 6,3 | mm | |
| Länge L2 des vorderen Bereiches: | 65 | mm | |
| Inhalt des vorderen Bereiches: | 7,1 | g | Quarz (Korngrösse 1,2 - 1,8 mm) |
| | 2,5 | g | Methylmethacrylat (MMA) |
| Länge L1 des rückwärtigen Bereiches: | 25 | mm | |
| Inhalt des rückwärtigen Bereiches: | 1,15 | g | Methylmethacrylat (MMA) |
| | 2,4 | g | Quarzmehl (Partikelgrösse 10 - 60 μm) |
| | 0,08 | g | pyrogene Kieselsäure |

Die Innenpatrone enthält:
0,8 g Dibenzoylperoxid
0,2 g Polymethylmethacrylat (PMMA; Partikelgrösse 0,1 mm)
1,7 g Quarzmehl (Partikelgrösse 10 - 60 μm)

Der aus Fig. 2 ersichtliche, insgesamt mit 20 bezeichnete Behälter besteht ebenfalls aus einer Aussenpatrone 21 und einer darin angeordneten Innenpatrone 22. Die Aussenpatrone 21 enthält die Harzkomponente 23. Der zwischen der Harzkomponente 23 und der Aussenpatrone 21 verbleibende Raum ist mit Fasermaterial 24 ausgefüllt. Dieses Fasermaterial 24 verhindert ebenfalls ein Verschieben der Innenpatrone 22 bzw der Harzkomponente 23 in der Aussenpatrone 21. Zur Markierung sowie um ein verkehrtes Einschieben des Behälters 20 in ein Bohrloch zu verhindern, ist eine Kappe 25 auf das rückwärtige Ende der Aussenpatrone 21 aufgesteckt. Die Kappe 25 besteht beispielsweise aus leicht zerstörbarem Kunststoff und weist einen grössten Aussendurchmesser auf, der vorzugsweise grösser ist, als der Durchmesser des für die Aufnahme des Behälters 20 vorgesehenen Bohrloches im Aufnahmematerial. In der Innenpatrone 22 ist wiederum die Härterkomponente 26 angeordnet.

Der aus Fig. 3 ersichtliche, insgesamt mit 30 bezeichnete Behälter besteht aus einer Aussenpatrone 31 und einer darin angeordneten Innenpatrone 32. Die Aussenpatrone 31 enthält wiederum die Harzkomponente 33. Im Unterschied zu den in Fig. 1 und 2 dargestellten Ausführungen, ist die Aussenpatrone 31 jedoch nicht zugeschmolzen, sondern mittels einer Dichtscheibe 34 und einer mit der Aussenpatrone 31 verrastbaren Kappe 35 verschlossen. Die Aussenpatrone 31 kann somit praktisch luftfrei mit der Harzkomponente 33 und der Innenpatrone 32 gefüllt werden. Die Härterkomponente 36 ist in der Innenpatrone 32 angeordnet.

Der aus Fig. 4 ersichtliche, insgesamt mit 40 bezeichnete Behälter besteht aus einer Aussenpatrone 41 und einer darin angeordneten Innenpatrone 42. Die Aussenpatrone 41 enthält die Harzkomponente 43 und ist an ihrem rückwärtigen, offenen Ende mit einem Gewinde 44 für eine Kappe 45 versehen. Die Härterkomponente 46 befindet sich in der Innenpatrone 42. Die Innenpatrone 42 sowie die Harzkomponente 43 werden durch eine Membran 47 sowie ein zwischen der Membran 47 und der Kappe 45 angeordnetes Federelement 48 in der dargestellten Lage gehalten. Die Kappe 45 sowie die Membran 47 und das Federelement 48 sind so ausgelegt, dass sie leicht zerstörbar sind. Bei Bedarf können die Kappe 45 und das Federelement 48 jedoch auch vor dem Einführen des Behälters 40 in ein Bohrloch entfernt werden.

## Patentansprüche

1. Zerstörbarer Behälter (10) für eine aushärtende Mehrkomponenten-Masse zur Verankerung eines Befestigungselementes in einem Bohrloch, bestehend aus einer Aussenpatrone (11, 21, 31, 41) und einer darin angeordneten Innenpatrone (12, 22, 32, 42), wobei in der einen Patrone (11, 21, 31, 41) die Harzkomponente und Füllstoffe (13, 23, 33, 43) und in der anderen Patrone (12, 22, 32, 42) die Härterkomponente (16, 26, 36, 46) sowie gegebenenfalls weitere Füllstoffe enthalten sind, dadurch gekennzeichnet, daß die, die Harzkomponente (13, 23, 33, 43) enthaltende Patrone (11, 21, 31, 41) einen in Einführrichtung vorderen Bereich (14) und einen daran anschliessenden, rückwärtigen Bereich (15) umfasst, wobei die Harzkomponente (13, 23, 33, 43) im rückwärtigen Bereich (15) Thixotropiermittel zur Erhöhung der Viskosität gegenüber derjenigen der Harzkomponente im vorderen Bereich (14) enthält.

2. Behälter nach Anspruch 1, dadurch gekennzeichnet, dass die Füllstoffe und die Harzkomponente, deren rückwärtiger Bereich (15) Thixotropiermittel enthält, in der Aussenpatrone (11, 21, 31, 41) und die Härterkomponente (16, 26, 36, 46) in der Innenpatrone (12, 22, 32, 42) angeordnet sind.

3. Behälter nach Anspruch 1 oder 2, dadurch gekennzeichnet, dass die Länge (L1) des das Thixotropiermittel enthaltenden, rückwärtigen Bereiches (15) der Harzkomponente (13) das 0,2- bis 0,4-fache der Länge (L2) des vorderen Bereiches (14) der Harzkomponente beträgt.

4. Behälter nach einem der Ansprüche 1 bis 3, dadurch gekennzeichnet, dass zwischen dem vorderen Bereich

4

(14) und dem rückwärtigen Bereich (15) der Harzkomponente (13) eine Trennschicht (17) angeordnet ist.

5. Behälter nach einem der Ansprüche 1 bis 5, gekennzeichnet durch eine mit dem rückwärtigen Ende der Aussenpatrone (21, 31, 41) verbindbare Kappe (25, 35, 45).

## Claims

1. Destructible container (10) for a hardening multicomponent mass for anchoring a fastening element in a drill-hole, comprising an outer cartridge (11, 21, 31, 41) and an inner cartridge (12, 22, 32, 42) arranged therein, the resin component and fillers (13, 23, 33, 43) being contained in the one cartridge (11, 21, 31, 41) and the hardener component (16, 26, 36, 46) as well as possibly further fillers being contained in the other cartridge (12, 22, 32, 42), characterised in that the cartridge (11, 21, 31, 41) which contains the resin component (13, 23, 33, 43) comprises, in the insertion direction, a front region (14) and a rearward region (15) linking thereto, the resin component (13, 23, 33, 43) in the rearward region (15) containing thixotropising agent to increase the viscosity as compared with that of the resin component in the front region (14).

2. Container according to Claim 1, characterised in that the fillers and the resin component, the rearward region (15) of which contains thixotropising agent, are arranged in the outer cartridge (11, 21, 31, 41) and the hardener component (16, 26, 36, 46) is arranged in the inner cartridge (12, 22, 32, 42).

3. Container according to Claim 1 or 2, characterised in that the length (L1) of the rearward region (15), containing the thixotropising agent, of the resin component (13) amounts to 0.2 to 0.4 times the length (L2) of the front region (14) of the resin component.

4. Container according to any one of Claims 1 to 3, characterised in that a separating layer (17) is arranged between the front region (19) and the rearward region (15) of the resin component (13).

5. Container according to any one of Claims 1 to 4, characterised by a cap (25, 35, 45) which can be connected to the rearward end of the outer cartridge (21, 31, 41).

## Revendications

1. Récipient destructible (10) pour une masse durcissable à plusieurs composantes pour l'ancrage d'un élément de fixation dans un perçage, comprenant une cartouche extérieure (11, 21, 31, 41) dans laquelle est disposée une cartouche intérieure (12, 22, 32, 42), l'une des cartouches (11, 21, 31, 41) contenant la composante de résine et des matières de remplissage (13, 23, 33, 43) et l'autre cartouche (12, 22, 32, 42) contenant le durcisseur (16, 26, 36, 46) et éventuellement d'autres matières de remplissage, caractérisé en ce que la cartouche (11, 21, 31, 41) contenant la composante de résine (13, 23, 33, 43) comprend une section antérieure (14) dans le sens d'introduction suivie d'une section postérieure (15), la composante de résine (13, 23, 33, 43) dans la section postérieure (15) contenant des agents thixotropiques pour augmenter la viscosité par rapport à celle de la composante de résine contenue dans la section antérieure (14).

2. Récipient selon la revendication 1, caractérisé en ce que les matières de remplissage et la composante de résine dont la section postérieure (15) contient des agents thixotropiques sont disposées dans la cartouche extérieure (11, 21, 31, 41) et que le durcisseur (16, 26, 36, 46) est placé dans la cartouche intérieure (12, 22, 32, 42).

3. Récipient selon l'une des revendications 1 ou 2, caractérisé en ce que la longueur (L1) de la section postérieure (15) de la composante de résine (13) contenant l'agent thixotropique est égale à 0,2 à 0,4 fois la longueur (L2) de la section antérieure (14) de la composante de résine.

4. Récipient selon l'une quelconque des revendications 1 à 3, caractérisé en ce qu'une couche de séparation (17) est intercalée entre la section antérieure (14) et la section postérieure (15) de la composante de résine (13).

5. Récipient selon l'une quelconque des revendications 1 à 4, caractérisé en ce qu'il comprend un capuchon (25, 35, 45) pouvant être fixé sur l'extrémité postérieure de la cartouche extérieure (21, 31, 41).

**Fig.1**

**Fig.2**

**Fig.3**

**Fig.4**